# EUROPÄISCHE PATENTSCHRIFT

(11) **EP 1 431 145 B1**
(45) Veröffentlichungstag und Bekanntmachung des Hinweises auf die Patenterteilung: **16.11.2005**
(21) Anmeldenummer: 03013112.2
(22) Anmeldetag: 11.06.2003
(51) Int. Cl.: B60S 1/08

(54) **Regensensor, insbesondere für ein Kraftfahrzeug**
Rain sensor, in particular for a motor vehicle
Capteur de pluie, en particulier pour un véhicule automobile

(30) Priorität: 20.12.2002 DE 10261246
(43) Veröffentlichungstag der Anmeldung: 23.06.2004
(73) Patentinhaber: ROBERT BOSCH GMBH, 70442 Stuttgart (DE)
(72) Erfinder: Espenschied, Wolfgang, 77815 Bühl (DE); Stampfer, Stefan, 77815 Buehl (DE)

(56) Entgegenhaltungen:
- DE-A- 10 060 964
- DE-A- 19 846 968
- US-A- 5 898 183

## Beschreibung

Die Erfindung betrifft einen Regensensor, insbesondere für ein Kraftfahrzeug nach Gattung des unabhängigen Anspruchs, der z. B. aus der DE 10060964 bekannt ist.

### Stand der Technik

Es sind Regensensoren in zahlreichen unterschiedlichen Ausführungsformen bekannt. Üblicherweise besteht ein solcher Sensor aus einer optischen Sende-Empfangsstrecke. Ein unter einem Winkel von ca. 45 Grad in die Fahrzeugscheibe eingekoppeltes Licht wird unter Totalreflexion an der trockenen äußeren Grenzfläche reflektiert und trifft in einen in passendem Winkel ausgerichteten optischen Empfänger. Stehen Wassertropfen oder steht ein Wasserfilm auf der Außenfläche der Scheibe, so tritt keine Totalreflexion mehr auf, sondern es wird ein erheblicher Teil des Lichts nach außen abgestrahlt. Das Empfangssignal wird dadurch deutlich geschwächt. Der Grad dieser Abschwächung kann als Maß für die Benetzung der Scheibe mit Wasser verwendet werden. Das gewonnene Signal kann bspw. als Eingangssignal einer Einschaltsteuerung einer Scheibenwischvorrichtung dienen. Gattungsgemäße Regensensoren mit optischen Sende-Empfangsstrecken sind bspw. aus der DE 100 41 776 A1 und aus der DE 100 60 964 A1 bekannt.

Die bekannten Regensensoren unterscheiden sich hinsichtlich ihrer Befestigung an der Windschutzscheibe und hinsichtlich ihres Aufbaus. So sind einteilige und zweiteilige Ausführungen bekannt. Ein einteiliger Regensensor wird üblicherweise über ein zusätzlich an der Scheibe anzubringendes Befestigungselement an die Scheibe gepresst, was auch als Anpresskoppelung bezeichnet wird. Bei der sog. Klebekoppelung wird meist ein zweiteiliger Regensensor verwendet. Ein Teil davon wird dabei direkt an die Scheibe geklebt. Dieses Teil wird meist als Trägerplatte bezeichnet, in die ein Linsensystem integriert ist. Die Klebeverbindung kann hierbei über ein sog. Koppelkissen hergestellt werden, das typischerweise eine ca. 1,5 bis 2 mm dicke und optisch transparente Haftklebefolie aus Polyacrylat o. dgl. ist. Die elektronische Einheit mit dem Sender und dem Empfänger wird nach der Klebung des optischen Teils mit diesem verbunden, bspw. mittels Schnapphaken oder mittels eines Schiebemechanismus.

### Vorteile der Erfindung

Bei einem Regensensor, der eine Messstrecke mit wenigstens einem Sender und wenigstens einem Empfänger für elektromagnetische Wellen aufweist, ist in der Messstrecke eine die Wellenausbreitung zwischen dem Sender und dem Empfänger beeinflussende Glasscheibe angeordnet. Die Beeinflussung erfolgt derart, dass sich bei Ausbildung eines Belages auf der Scheibe ein vom Empfänger detektiertes Ausgangssignal ändert. Der Regensensor weist weiterhin eine mit der Windschutzscheibe verbindbare Optikeinheit mit Strukturen zur Ein- und Auskoppelung der elektromagnetischen Wellen auf, die strahlungsbündelnde Eigenschaften aufweisen. In einem mit der Optikeinheit verbindbaren Gehäusedeckel ist eine Elektronikeinheit angeordnet. Gemäß der Erfindung ist die Elektronikeinheit in einem Zwischenträger gelagert, der lösbar mit dem Gehäusedeckel verbindbar ist.

Die elektromagnetischen Wellen sind bei einer bevorzugten Ausgestaltung bzw. Anwendung des Regensensors Lichtwellen. Diese können im Wesentlichen Wellenlängenanteile im sichtbaren Bereich als auch im nicht sichtbaren Bereich aufweisen. Insbesondere Infrarotlicht eignet sich gut für die vorliegende Anwendung. Bei der Glasscheibe handelt es sich vorzugsweise um eine Windschutzscheibe eines Kraftfahrzeuges, bei dem der Regensensor vorzugsweise zum Einsatz kommt. Der Belag auf der Windschutzscheibe kann insbesondere ein feuchter Niederschlag, bspw. Regen oder Nebel sein.

Die Leiterplatte kann mittels einer lösbaren Rast- und/oder Steckverbindung im Zwischenträger gelagert sein. Der Zwischenträger ist vorzugsweise mittels einer lösbaren Rast- und/oder Steckverbindung mit dem Gehäusedeckel verbunden und dort schwimmend gelagert. Weiterhin ist der Gehäusedeckel vorzugsweise mittels einer lösbaren Rast- und/oder Steckverbindung mit der Optikeinheit verbindbar. Der erfindungsgemäße Regensensor kann mit Hilfe des Zwischenträgers sehr kompakte Außenabmessungen aufweisen und bleibt dabei aufgrund der lösbaren Verbindung zwischen Gehäusedeckel und Optikeinheit dennoch gut für Reparaturarbeiten zugänglich. Derartige mehrteileigen Regensensoren erweisen sich bei einer Klebekoppelung mit der Windschutzscheibe gegenüber einteiligen Ausführungen als besser zugänglich für Wartungs- und Reparaturarbeiten. Hierbei wird zunächst die Optikeinheit an die Scheibe geklebt, was bereits durch den Scheiben- bzw. Fahrzeughersteller erfolgen kann. In einem weiteren Montageschritt wird die Elektronikkomponente mit dem schützenden Gehäuse auf die Optikeinheit montiert.

Die Optikeinheit weist vorzugsweise eine mit der Windschutzscheibe verbindbare Fügefläche auf. Diese Fügefläche kann mittels einer transparenten Klebstoffschicht auf der Windschutzscheibe befestigt werden. Mit einer solchen Anordnung kann in vorteilhafter Weise ein zweiteiliger Regensensor-Aufbau realisiert werden, der ein an die Scheibe klebbares Trägerteil mit optischen Komponenten umfasst, dass sehr robust und einfach aufgebaut und damit auch sehr kostengünstig realisierbar ist. Zusätzlich kann mit der erfindungsgemäßen Anordnung eine sehr geringe Baugröße des Sensors, sowohl hinsichtlich der Sensorhöhe als auch der lateralen Ausdehnung erreicht werden.

Die Optikeinheit ist zumindest partiell transparent und kann mittels einer transparenten Haftfolie o. dgl. an die Windschutzscheibe geklebt werden. Für die haftende Verbindung kann wahlweise auch ein transparenter Reaktions- bzw. Schmelzklebstoff eingesetzt werden.

Die Elektronikeinheit umfasst vorzugsweise wenigstens eine Leiterplatte mit darauf befindlichen elektronischen Komponenten. Zweckmäßigerweise sind Sender und Empfänger auf dieser Leiterplatte bereits montiert, bevor sie mittels des Zwischenträgers im Gehäuse des Regensensors befestigt wird. Vorzugsweise umfasst die Leiterplatte auch einen Steckerverbindungsanschluss zur Verbindung mit einem Kabelbaum des Kraftfahrzeugs.

Der Zwischenträger kann in vorteilhafter Weise mittels einer schwimmenden Lagerung am Deckel fixiert sein. Der Zwischenträger kann in der erfindungsgemäßen Ausführung einen guten mechanischen Schutz der Leiterplatte bieten, insbesondere während des Transports und der Handhabung der Elektronikeinheit bei der Montage. Mittels des Zwischenträgers kann zudem ein vollständiger Ausgleich evtl. bestehender Dickentoleranzen der Leiterplatte erreicht werden.

Die geometrische Zuordnung des Linsensystems der Optikeinheit zu den Sender- und Empfangsbauteilen der Elektronikeinheit kann auf verschiedene Arten erfolgen, bspw. mittels in Aussparungen des Zwischenträgers eingreifender Zentrierstifte der Optikeinheit und mittels einer schwimmenden Lagerung des Zwischenträgers im Gehäusedeckel, was auch durch eine Klemmung des Zwischenträgers bei der Endmontage zwischen Gehäuse und Lichtleiter erfolgen kann.

Der Zwischenträger weist an einen Strahlengang zwischen Sender und Empfänger angepasste Aussparungen auf. Diese Aussparungen sind bspw. als optische Öffnungen in Form von kreisrunden, elliptischen oder anders geformten gestaltet, die sowohl in ebener als auch in räumlicher Gestaltung, bspw. in Form von Tuben oder beliebigen Freiformflächen, ausgestaltet sein können, und die den Lichtweg zwischen Linsen der Optikeinheit und dem Sender sowie dem Empfänger freigeben.

In einer weiteren Ausgestaltung der Erfindung können die Aussparungen zumindest teilweise eine Füllung mit einer optisch wirksamen Substanz aufweisen. Die Aussparungen können bspw. mit einer Komponente gefüllt sein, die bestimmte gewünschte optische Funktionen erfüllt. Eine solche gewünschte Funktion kann bspw. die Lichtführung bzw. Lichtbündelung und/oder eine Wellenlängenselektion sein. Hierzu kann die Komponente als Linse, als Lichtleiter oder als Filter ausgebildet sein. Ein derartiger Filter kann insbesondere eine Farbfolie sein, die vom Zwischenträgerwerkstoff bei einem Spritzgießvorgang hinterspritzt wird. Der Filter kann auch als eingefärbter Kunststoff ausgebildet sein, der in die Aussparungen eingespritzt wird.

Die Erfindung wird nachfolgend in bevorzugten Ausführungsbeispielen anhand der zugehörigen Zeichnungen näher erläutert. Dabei zeigt:
- Figur 1: einen erfindungsgemäßen Regensensor in Einzelteilen und schematischer Darstellung,
- Figur 2: eine schematische Explosionsdarstellung eines Oberteils des Regensensors,
- Figur 3: eine schematische Explosionsdarstellung einer Optikeinheit des Regensensors,
- Figur 4: eine schematische Perspektivdarstellung einer Elektronikeinheit des erfindungsgemäßen Regensensors,
- Figuren 5 und 6: perspektivische Teilschnittdarstellungen des Oberteils des Regensensors und
- Figur 7: eine schematische Schnittdarstellung des erfindungsgemäßen Regensensors im an eine Windschutzscheibe montierten Zustand.

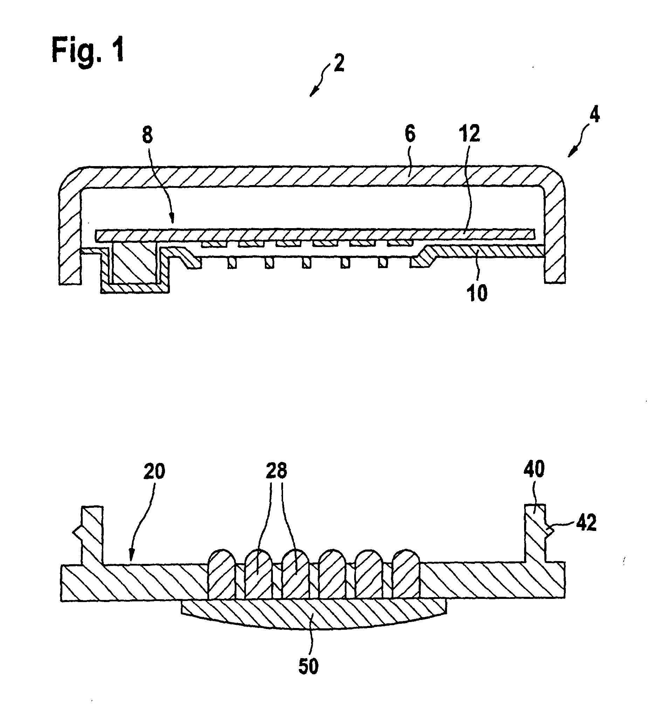

In den Figuren 1 bis 7 ist ein erfindungsgemäßer Regensensor 2 in schematischen Darstellungen gezeigt. Gleiche Teile in den Figuren sind grundsätzlich mit gleichen Bezugszeichen versehen und werden teilweise nicht mehrfach erläutert.

Der Regensensor 2 umfasst eine Elektronikeinheit 8, die im Wesentlichen die elektronischen und optischen Komponenten umfasst und eine Optikeinheit 20 zur Beeinflussung eines Strahlengangs zwischen Sender 16 und Empfänger 18. Die Elektronikeinheit 8 umfasst im gezeigten Ausführungsbeispiel eine Leiterplatte 12, einen Zwischenträger 10 und ein Oberteil 4 des Regensensors 2. Die Leiterplatte 12 ist über den Zwischenträger 10 im Oberteil 4 befestigt. Das Oberteil 4 weist einen dicht nach außen abschließenden Gehäusedeckel 6 auf. Der Gehäusedeckel 6 des Oberteils 4 mit der darin angeordneten Elektronikeinheit 8 ist über eine Rast- und/oder Steckverbindung mit einer Optikeinheit 20 verbindbar.

Die Optikeinheit 20 umfasst u.a. Linsen 28 zur Beeinflussung des Strahlengangs zwischen Sender 16 und Empfänger 18 und ist über eine Klebeverbindung auf einer Windschutzscheibe befestigbar. Hierzu weist die Optikeinheit 20 eine vom Gehäusedeckel 6 abgewandte und zur Windschutzscheibe 44 gerichtete Fügefläche auf, die über eine Klebstoffschicht mit der Windschutzscheibe 44 fest verbindbar ist. An der Unterseite der Optikeinheit ist weiterhin ein Koppelkissen 50 erkennbar, das dafür sorgt, dass sich keine Luft zwischen der Windschutzscheibe und den Linsen befindet, die für eine unerwünschte Änderung der Brechungsverhältnisse sorgen könnte.

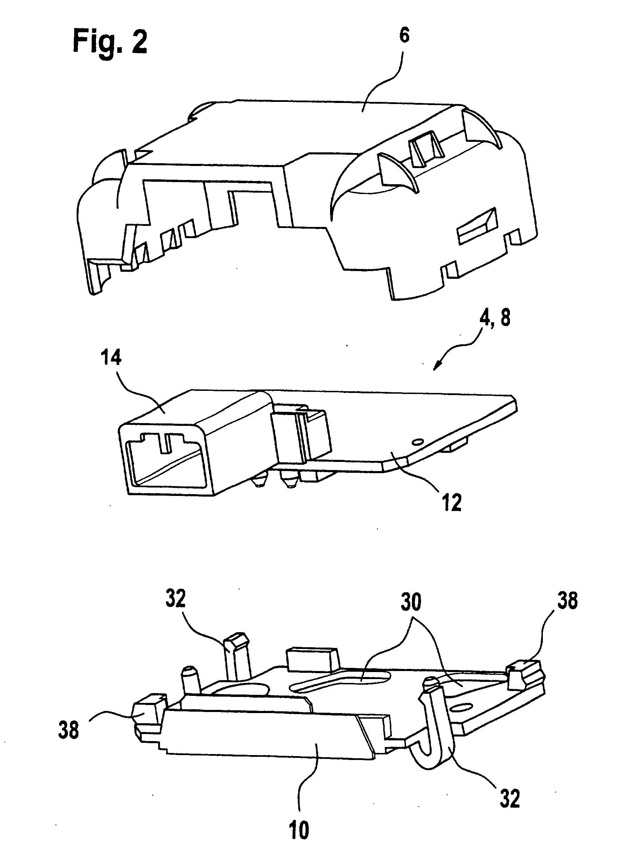

Im Gehäusedeckel 6 des Oberteils 4 ist mittels einer Rast- und/oder Steckverbindung ein Zwischenträger 10 lösbar befestigt. An diesem ist über eine Rast- und/oder Steckverbindung die Leiterplatte 10 lösbar befestigt, auf der der Sender 16 sowie der Empfänger 18 angeordnet ist. Der Sender 16 kann insbesondere eine LED sein. Der Empfänger 18 kann insbesondere eine Photodiode o. dgl. sein. Die Wellenlängenbereiche von Sender 16 und Empfänger 18 sind zweckmäßigerweise so aufeinander abgestimmt, dass der Sender 16 einen relativ schmalen Wellenlängenbereich abstrahlt und der Empfänger 18 im Wesentlichen nur für diesen Wellenlängenbereich empfindlich ist. Sender 16 und Empfänger 18 befinden sich an gegenüber liegenden Enden der Leiterplatte 12, so dass ein Strahlengang mit schräg ausfallendem und schräg einfallendem Licht gebildet werden kann. Der Ein- und Ausfallswinkel ist gleich und kann in einem sinnvollen Bereich um ca. 42 bis 65 Grad liegen. Die Leiterplatte 12 weist vorzugsweise eine Schaltung mit der erforderlichen Sende- und Auswerteelektronik auf und ist über einen Steckanschluss 14 (vgl. Figur 2) mit einem Fahrzeugbordnetz verbunden.

Der Gehäusedeckel 6 kann eine zylindrische oder quaderförmige Kontur mit herunter gezogenen Seitenteilen aufweisen. Diese dienen zur Verbindung mit seitlichen Raststegen 40 der Optikeinheit 20, die das Unterteil des Regensensors 2 bildet. Die Optikeinheit 20 weist vorzugsweise eine runde oder rechteckförmige Kontur auf, die der Kontur des Gehäusedeckels 6 angepasst ist. Die Verbindung zum Gehäusedeckel 6 erfolgt über seitlich aus den senkrecht nach oben gezogenen Raststegen 40 ragende Rastnasen 42, die in entsprechende Vertiefungen (nicht dargestellt) an den Innenseiten der Seitenteile des Gehäusedeckels 6 einrasten und auf diese Weise für eine feste, jedoch im Bedarfsfall lösbare Verbindung des Oberteils 4 mit dem Unterteil der Optikeinheit 20 sorgen können.

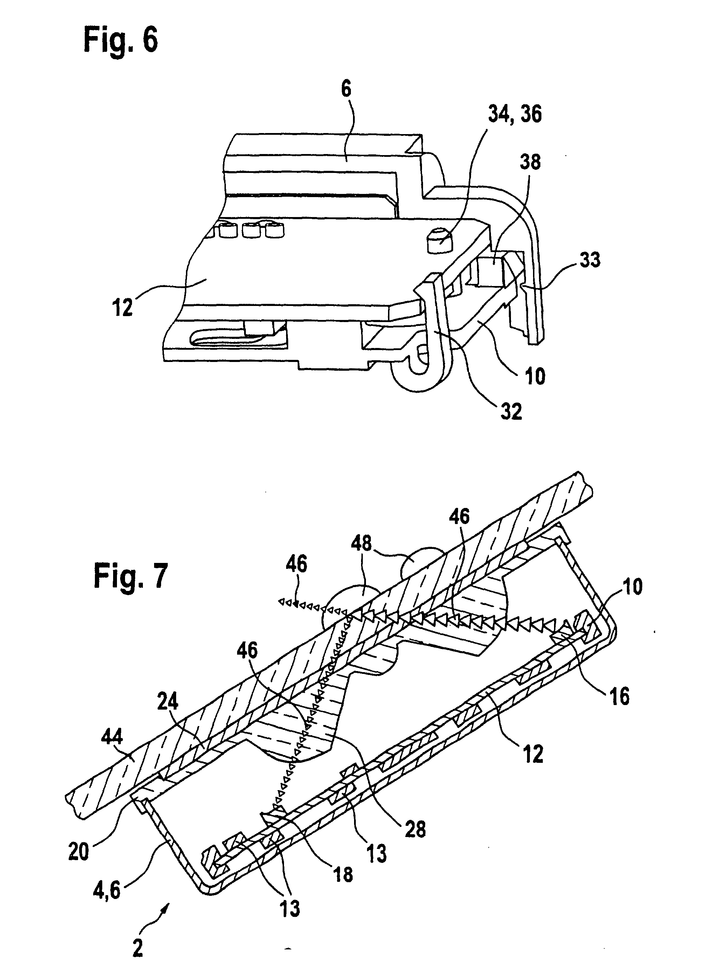

An der Außenseite der Windschutzscheibe 44 ist ein Wassertropfen 48 angedeutet, der für eine Veränderung der Brechungsverhältnisse an der Grenzfläche zur Luft sorgt (vgl. Figur 7). Diese veränderte Lichtbrechung resultiert in einer variablen Signalabschwächung des vom Empfänger detektierten Lichtanteils und ist ein Maß für die Benetzung der Windschutzscheibe 44 mit feuchtem Niederschlag.

Figur 2 verdeutlicht in einer schematischen Explosionsdarstellung die aus Gehäusedeckel 6, Zwischenträger 10 und Leiterplatte 12 bestehende Elektronikeinheit 8. Im gewölbten Gehäusedeckel 6 ist der Zwischenträger 10 verrastbar. Mit dem Zwischenträger 10 ist die Leiterplatte 12 verrastbar. Die Rastverbindungen werden insbesondere anhand der Detailschnittdarstellungen der Figuren 5 und 6 verdeutlicht. Der Zwischenträger 10 weist eine rechteckförmige Kontur auf und ist vorzugsweise etwas größer als die Leiterplatte 12, so dass seitlich nach oben ragende Rasthaken 32 die Leiterplatte 12 an deren Rand seitlich umgreifen können. Auf der zur Leiterplatte 12 gerichteten Oberseite des Zwischenträgers 10 sind randseitig wenigstens zwei Auflageflächen 38 vorgesehen, die zur definierten Auflage der Leiterplatte 12 dienen, wenn diese mittels der Rasthaken 32 mit dem Zwischenträger 10 verbunden ist. Die Auflageflächen 38 sind vorzugsweise flexibel ausgestaltet, so dass die Leiterplatte 12 auch bei unterschiedlichen Dicken oder anderen Maßtoleranzen zuverlässig fixiert ist. Zur definierten Lagefixierung der beiden Teile zueinander sind weiterhin Zentrierstifte 34 am Zwischenträger 10 vorgesehen, die in entsprechende Zentrieröffnungen 36 der Leiterplatte 12 eingreifen können.

Der Zwischenträger 10 mit der darin verrasteten Leiterplatte 12 kann schließlich im Gehäusedeckel 6 verrastet werden, was durch an dessen Innenseite angeordnete Rastvorsprünge 33 sowie einen entsprechend geformten Rand des Zwischenträgers 10 erfolgen kann. Einer dieser Rastvorsprünge 33 an der Innenwandung des Gehäusedeckels 6 ist in Figur 6 angedeutet.

An der Leiterplatte 12 ist weiterhin ein Steckanschluss 14 befestigt, der durch eine entsprechende Aussparung im Gehäusedeckel 6 nach außen geführt ist und der zur elektrischen Verbindung mit einem Fahrzeugbordnetz dient.

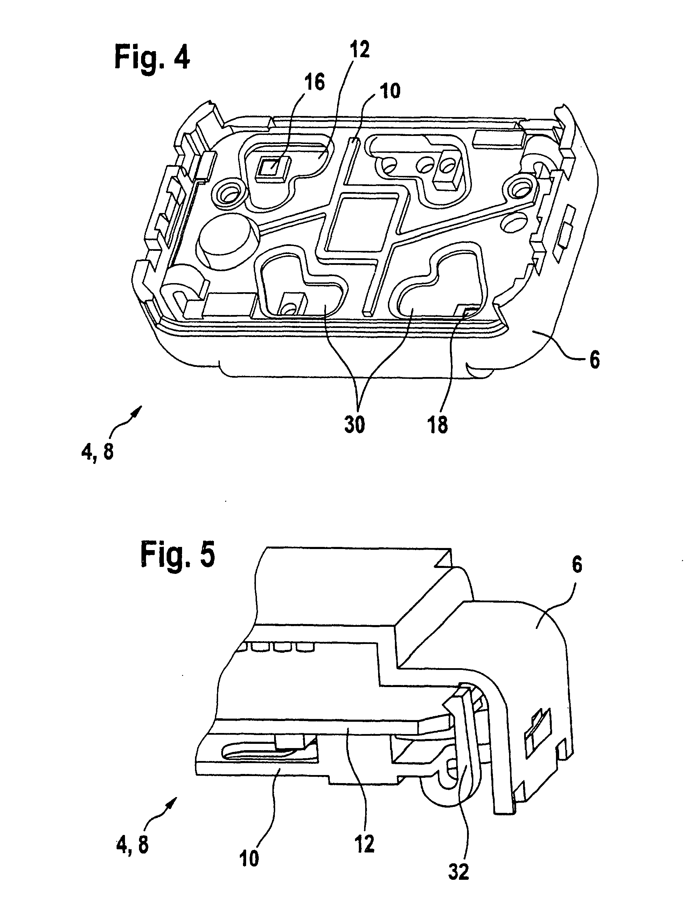

Weiterhin weist der Zwischenträger eine Reihe von Aussparungen 30 auf, um den in der Messstrecke zwischen Sender 16 und Empfänger 18 verlaufenden Strahlengang 46 nicht zu behindern. Die Anordnung dieser Aussparungen 30 in Bezug auf die auf der Leiterplatte 12 befindlichen Sender 16 und Empfänger 18 ist insbesondere anhand von Figur 4 verdeutlicht.

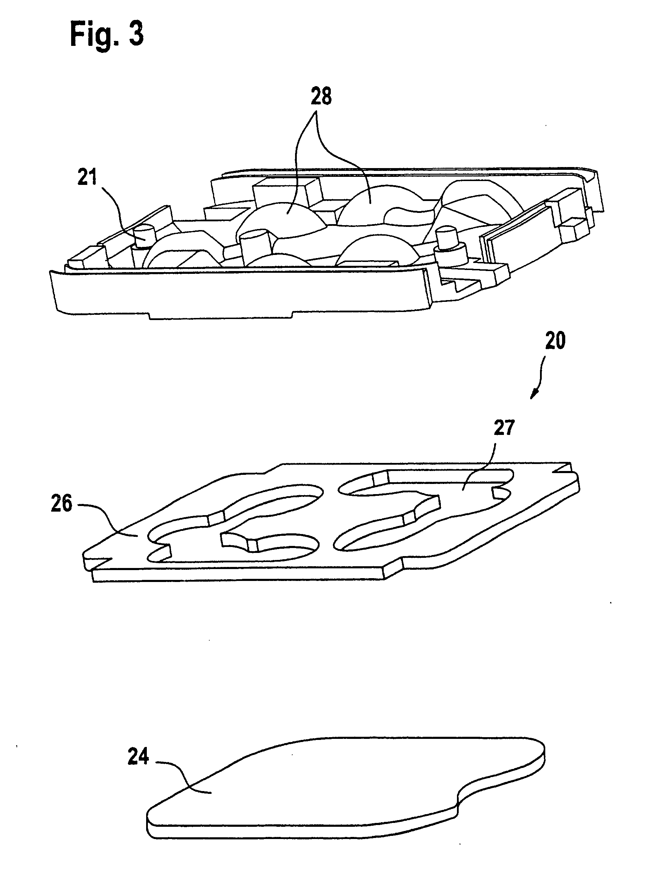

Figur 3 zeigt in einer schematischen Explosionsdarstellung die Optikeinheit 20, bestehend aus einem Lichtleiter 21 in Gestalt eines transparenten und mit Linsen 28 zur Beeinflussung des Strahlengangs versehenen Strukturbauteils, einer daran angebrachten Fremdlichtsperre 26 sowie der Klebstoffschicht 24 zur Verbindung mit der Windschutzscheibe. Die Fremdlichtsperre 26 befindet sich an der Unterseite der Optikeinheit 20 und weist Lichtöffnungen 27 an den Ein- und Auskoppelstellen des Strahlengangs 46 auf, wodurch die Lichtaustritts- und die Lichteintrittsbereiche der Optikeinheit 20 definiert sind. Auf diese Weise werden Umgebungslichtanteile ausgefiltert und es kann die Signalgüte des Regensensors 2 verbessert werden.

Figur 7 zeigt schließlich eine Prinzipdarstellung des an der Innenseite der Windschutzscheibe 44 befestigten Regensensors 2. Verdeutlicht ist hierbei insbesondere der Strahlengang 46 zwischen Sender 16 und Empfänger 18 sowie die Auskoppelung eines Teils der vom Sender 16 emittierten Lichtanteile an einem Wassertropfen 48 an der Außenseite der Scheibe.

Der die Leiterplatte 12 flexibel tragende Zwischenträger 10 ist hierbei lediglich angedeutet. Ebenfalls nur angedeutet sind Elektronikkomponenten 13, die neben Sender 16 und Empfänger 18 auf der Leiterplatte 12 angeordnet sind.

### Bezugszeichenliste

- 2: Regensensor
- 4: Oberteil
- 6: Gehäusedeckel
- 8: Elektronikeinheit
- 10: Zwischenträger
- 12: Leiterplatte
- 13: Elektronikkomponenten
- 14: Steckanschluss
- 16: Sender
- 18: Empfänger
- 20: Optikeinheit
- 21: Lichtleiter
- 22: Fügefläche
- 24: Klebstoffschicht
- 26: Fremdlichtsperre
- 27: Lichtöffnung
- 28: Linse
- 30: Aussparung
- 32: Rasthaken
- 33: Rastvorsprung
- 34: Zentrierstift
- 36: Zentrieröffnung
- 38: Auflagefläche
- 40: Raststeg
- 42: Rastnase
- 44: Windschutzscheibe
- 46: Strahlengang
- 48: Wassertropfen
- 50: Koppelkissen

## Patentansprüche

1. Regensensor (2), insbesondere für ein Kraftfahrzeug, mit einer wenigstens einen Sender (16) und wenigstens einen Empfänger (18) für elektromagnetische Wellen aufweisenden Messstrecke, in der eine die Wellenausbreitung zwischen dem wenigstens einen Sender (16) und dem wenigstens einen Empfänger (18) derart beeinflussende Windschutzscheibe angeordnet ist, dass sich bei Ausbildung eines Belages auf der Windschutzscheibe, insbesondere bei einer Benetzung durch feuchten Niederschlag, ein vom Empfänger (18) detektiertes Ausgangssignal ändert, und mit einer mit der Windschutzscheibe verbindbaren Optikeinheit (20) mit Strukturen zur Ein- und Auskoppelung der elektromagnetischen Wellen, die strahlungsbündelnde Eigenschaften aufweisen, wobei in einem mit der Optikeinheit (20) verbindbaren Gehäusedecke (6) eine leiterplatte (12) umfassende Elektronikeinheit (8) angeordnet ist, **dadurch gekennzeichnet, dass** die Leiterplatte (12) mit einem Zwischenträger (10) befestigt ist, der lösbar mit dem Gehäusedekkel (6) verbunden und schwimmend gelagert ist.

2. Regensensor nach Anspruch 1, **dadurch gekennzeichnet, dass** die Leiterplatte (12) über eine lösbare Rast- und/oder Steckverbindung im bzw. am Zwischenträger (10) gelagert ist.

3. Regensensor nach Anspruch 1 oder 2, **dadurch gekennzeichnet, dass** der Zwischenträger (10) mittels einer lösbaren Rast- und/oder Steckverbindung mit dem Gehäusedeckel (6) verbindbar ist.

4. Regensensor nach einem der Ansprüche 1 bis 3, **dadurch gekennzeichnet, dass** der Gehäusedeckel (6) mittels einer lösbaren Rast- und/oder Steckverbindung mit der Optikeinheit (20) verbindbar ist.

5. Regensensor nach einem der vorhergehenden Ansprüche, **dadurch gekennzeichnet, dass** die Optikeinheit (20) eine mit der Windschutzscheibe (44) verbindbare Fügefläche (22) aufweist.

6. Regensensor nach Anspruch 5, **dadurch gekennzeichnet, dass** die Fügefläche (22) mittels einer transparenten Klebstoffschicht (24) auf der Windschutzscheibe (44) befestigbar ist.

7. Regensensor nach einem der vorhergehenden Ansprüche, **dadurch gekennzeichnet, dass** der Zwischenträger (10) mittels einer schwimmenden Lagerung im Deckel (6) fixiert ist.

8. Regensensor nach einem der vorhergehenden Ansprüche, **dadurch gekennzeichnet, dass** die Einbaulage der Leiterplatte (12) im Zwischenträger (10) mittels wenigstens eines in eine Zentrieröffnung (36) eingreifenden Zentrierstifts (34) definiert ist.

9. Regensensor nach einem der vorhergehenden Ansprüche, **dadurch gekennzeichnet, dass** der Zwischenträger (10) an einen Strahlengang (46) zwischen Sender (16) und Empfänger (18) angepasste Aussparungen (30) aufweist.

10. Regensensor nach Anspruch 9, **dadurch gekennzeichnet, dass** zumindest ein Teil der Aussparungen (30) eine Füllung mit einer optische wirksamen Substanz aufweisen.

11. Regensensor nach Anspruch 10, **dadurch gekennzeichnet, dass** die optische Substanz der Füllung eine Filterung von Wellenlängenanteilen und/oder eine Lichtbündelung bewirkt.

## Claims

1. Rain sensor (2), in particular for a motor vehicle, having a measurement path having at least one transmitter (16) and at least one receiver (18) for electromagnetic waves and in which a windscreen which influences the propagation of waves between the at least one transmitter (16) and the at least one receiver (18) is arranged in such a way that when a coating is formed on the windscreen, in particular when it is wetted by moist precipitation, an output signal which is detected by the receiver (18) changes, and having an optical unit (20) which can be connected to the windscreen and has structures for feeding in and extracting the electromagnetic waves which have beam-focusing properties, an electronic unit (8) which comprises a printed circuit board (12) being arranged in a housing lid (6) which can be connected to the optical unit (20), **characterized in that** the printed circuit board (12) is attached to an intermediate carrier (10) which is detachably connected to the housing lid (6) and mounted in a floating fashion.

2. Rain sensor according to Claim 1, **characterized in that** the printed circuit board (12) is mounted in or on the intermediate carrier (10) by means of a detachable latching and/or plug-in connection.

3. Rain sensor according to Claim 1 or 2, **characterized in that** the intermediate carrier (10) can be connected to the housing lid (6) by means of a detachable latching and/or plug-in connection.

4. Rain sensor according to one of Claims 1 to 3, **characterized in that** the housing lid (6) can be connected to the optical unit (20) by means of a detachable latching and/or plug-in connection.

5. Rain sensor according to one of the preceding claims, **characterized in that** the optical unit (20) has an attachment face (22) which can be connected to the windscreen (44).

6. Rain sensor according to Claim 5, **characterized in that** the attachment face (22) can be attached to the windscreen (44) by means of a transparent adhesive layer (24).

7. Rain sensor according to one of the preceding claims, **characterized in that** the intermediate carrier (10) is secured in the lid (6) by means of a floating mount.

8. Rain sensor according to one of the preceding claims, **characterized in that** the installation position of the printed circuit board (12) in the intermediate carrier (10) is defined by means of at least one centring pin (34) which engages in a centring opening (36).

9. Rain sensor according to one of the preceding claims, **characterized in that** the intermediate carrier (10) has cutouts (30) which are adapted to a beam path (46) between the transmitter (16) and receiver (18).

10. Rain sensor according to Claim 9, **characterized in that** at least some of the cutouts (30) have a filling with an optically active substance.

11. Rain sensor according to Claim 10, **characterized in that** the optical substance of the filling causes wavelength components to be filtered and/or focuses the light.

## Revendications

1. Capteur de pluie (2) notamment pour véhicule automobile comportant un chemin de mesure avec au moins un émetteur (16) et au moins un récepteur (18) d'ondes électromagnétiques, chemin équipé d'un pare-brise influençant le développement des ondes entre l'émetteur (16) et le récepteur (18) de façon qu'un dépôt sur le pare-brise, notamment un dépôt humide modifie le signal de sortie détecté par le récepteur (18) ainsi qu'une unité optique (20) reliée au pare-brise et ayant des structures dont les caractéristiques de regroupement de faisceau, permettent d'aborder et d'émettre, les ondes électromagnétiques,
avec dans au moins un couvercle (6) susceptible d'être relié à l'unité optique (20), une plaque de circuit (12) ayant une unité électronique (8),
**caractérisé en ce que**
la plaque de circuit (12) est fixée à un support intermédiaire (10) relié de manière amovible et monté de manière amovible et flottante au couvercle (6) du boîtier.

2. Capteur de pluie selon la revendication 1,
**caractérisé en ce que**
la plaque de circuit (12) est montée par l'intermédiaire d'une liaison amovible d'encliquetage et/ou d'enfichage sur ou dans le support intermédiaire (10).

3. Capteur de pluie selon l'une quelconque des revendications 1 ou 2,
**caractérisé en ce que**
le support intermédiaire (10) peut être relié au couvercle (6) du boîtier par une liaison amovible d'encliquetage et/ou d'enfichage.

4. Capteur de pluie selon l'une quelconque des revendications 1 à 3,
**caractérisé en ce que**
le couvercle (6) du boîtier peut être relié à l'unité optique (20) par une liaison amovible d'encliquetage et/ou d'enfichage.

5. Capteur de pluie selon l'une quelconque des revendications précédentes,
**caractérisé en ce que**
l'unité optique (20) comporte une surface d'assemblage (22) qui peut être reliée au pare-brise (44).

6. Capteur de pluie selon la revendication 5,
**caractérisé en ce que**
la surface d'assemblage (22) se fixe à l'aide d'une couche adhésive transparente (24) au pare-brise (44).

7. Capteur de pluie selon l'une quelconque des revendications précédentes,
**caractérisé en ce que**
le support intermédiaire (10) se fixe au couvercle (6) par l'intermédiaire d'un montage flottant.

8. Capteur de pluie selon l'une quelconque des revendications précédentes,
**caractérisé en ce que**
la position de montage de la plaque de circuit (12) dans le support intermédiaire (10) est définie à l'aide d'au moins une broche de centrage (34) pénétrant dans un orifice de centrage (36).

9. Capteur de pluie selon l'une quelconque des revendications précédentes,
**caractérisé en ce que**
le support intermédiaire (10) comporte des cavités (30) adaptées au chemin du faisceau (46) entre l'émetteur (16) et le récepteur (18).

10. Capteur de pluie selon la revendication 9,
**caractérisé en ce qu'**
au moins une partie des cavités (30) comporte un remplissage formé d'une substance à effet optique.

11. Capteur de pluie selon la revendication 10,
**caractérisé en ce que**
la substance optique de la charge assure le filtrage de composantes de longueurs d'ondes et/ou un regroupement du faisceau lumineux.
